# EUROPÄISCHE PATENTSCHRIFT

(11) **EP 1 995 843 B1**
(45) Veröffentlichungstag und Bekanntmachung des Hinweises auf die Patenterteilung: **06.01.2016**
(21) Anmeldenummer: 08103616.2
(22) Anmeldetag: 18.04.2008
(51) Int. Cl.: H02J 7/14, H02M 3/158, H02J 7/00, H02J 7/34

(54) **Energiespeicheranordnung für Kraftfahrzeuge**
Energy storage assembly for motor vehicles
Dispositif de stockage d'énergie pour véhicules automobiles

(30) Priorität: 21.04.2007 DE 102007018987
(43) Veröffentlichungstag der Anmeldung: 26.11.2008
(73) Patentinhaber: Hella KGaA Hueck & Co., 59552 Lippstadt (DE)
(72) Erfinder: Weghaus, Ludger, 59556, Lippstadt (DE); Flöttmann, Bernd, 33335, Gütersloh (DE); Ellbracht, Volker, 59609, Anröchte (DE)

(56) Entgegenhaltungen:
- EP-A1- 1 360 090
- JP-A- H0 682 265
- JP-A- H05 276 689
- US-A1- 2005 264 268

## Beschreibung

Die Erfindung betrifft ein Bordnetz in einem Kraftfahrzeug mit zumindest einem sicherheitsrelevanten Verbraucher, mit einer Starter- oder Fahrzeugbatterie, einem Generator und mit einer Speicheranordnung für elektrische Energie, wobei die Speicheranordnung geeignet und eingerichtet ist, bei Ausfall des Generators und/oder der Starterbatterie die Energie für den sicherheitsrelevanten Verbraucher zur Verfügung zu stellen, wobei die Speicheranordnung einen Energiespeicher, einen Eingang und einen Ausgang aufweist und wobei die Speicheranordnung geeignet und eingerichtet ist, über den Eingang elektrische Energie aus dem Bordnetz zum Speichern in dem Energiespeicher aufzunehmen und über den Ausgang aus dem Energiespeicher entnommene elektrische Energie an einen am Ausgang angeschlossenen Teil des Bordnetzes abzugeben, wobei die Speicheranordnung zumindest einen elektrischen Spannungswandler aufweist, der für den Transport von elektrischer Energie zwischen dem Eingang und/oder dem Ausgang einerseits und dem Energiespeicher andererseits geeignet und eingerichtet ist, wobei ein Ausgang des Generators mit einem der Eingänge der Speicheranordnung und der Starterbatterie verbunden ist.

In modernen Kraftfahrzeugen werden zunehmend verschiedene Funktionen von elektrischen Komponenten gesteuert, die in früheren Fahrzeugen unmittelbar vom Fahrer bedient worden sind. Es seien beispielsweise die drive by wire, brake by wire, shift by wire und steer by wire Funktionen genannt. Als Sammelbegriff für derartige Funktionen wurde der Begriff X-by-wire geprägt. Die Verfügbarkeit dieser Funktionen hängt zuletzt immer auch an der Verfügbarkeit von elektrischer Energie, die üblicher Weise vom Generator erzeugt und in der Fahrzeugbatterie beziehungsweise Starterbatterie gespeichert wird.

Viele der X-by-wire-Funktionen erfordern es, dass die Versorgung der diesen Funktionen zugeordneten elektrischen Steuergeräte, Sensoren usw. mit elektrischer Energie redundant ausgelegt ist, damit die Funktion bei Ausfall einer Energiequelle, zum Beispiel in Folge einer defekten Fahrzeugbatterie oder eines defekten Generators, nicht beeinträchtigt wird. Es muss dann gewährleistet sein, dass die redundante Energiequelle in der Lage ist, eine definierte Menge elektrische Energie abzugeben, und diese innerhalb einer definierten Zeit gemäß einem definierten Lastprofil zur Verfügung zu stellen. Außerdem muss sie in der Lage sein, die für die Funktion der X-by-wireKomponente erforderlichen Spannungen im an den Ausgang angeschlossenen Teil des Bordnetzes aufrecht zu erhalten, d. h. üblicherweise eine Spannung von mindestens 9 Volt in dem Teil zu garantieren.

Als redundante Energiequellen werden in heutigen Kraftfahrzeugen zumeist weitere Fahrzeugbatterien beziehungsweise Akkumulatoren verwendet. Wegen der relativ geringen Lebensdauer dieser Energiespeicher müssen diese mit zum Teil hohem Arbeitsaufwand gewartet werden. Oft ist eine weitere Erhaltung der Batterie nicht möglich, so dass diese, um keine Sicherheitseinbußen in Kauf zu nehmen, ersetzt werden muss. Der Nachteil von solchen Batterien ist außerdem, dass diese nicht über einen ausreichenden Kurzschlussschutz und nicht über einen ausreichenden Überspannungsschutz verfügen. Dieses muss daher separat vorgesehen werden. Außerdem müssen für die Erleichterung der Wartung Mittel zur Diagnose des Zustands der Batterien vorgesehen werden.

Neben Batterien werden gelegentlich als redundante Energiequellen auch Reihenschaltungen von Doppelschichtkondensatoren verwendet. Dadurch ist eine Reduzierung des Wartungsaufwands möglich, da dieses Energiespeicher auf kapazitiver Basis sind. Der Nachteil der bisher verwendeten Reihenschaltungen von Doppelschichtkondensatoren ist, dass bei der Auswahl der Doppelschichtkondensatoren nicht nur die speicherbare Energie berücksichtigt werden muss, sondern auch der minimal zur Verfügung stehende Spannungspegel. Die maximale Spannung eines Doppelschichtkondensators ist derzeit aufgrund der Technologie auf 2,5 Volt bis 2,7 Volt begrenzt, so dass eine Reihenschaltung von Doppelschichtkondensatoren notwendig ist, um die erforderliche Spannung von in der Regel 9 Volt zu erreichen. Ein Doppelschichtkondensator allein ist daher nicht ausreichend eine redundante Energiequelle zu bilden. Durch die Reihenschaltung der Doppelschichtkondensatoren entstehen jedoch höhere Kosten. Ein Problem was bei solchen Reihenschaltungen außerdem auftritt ist, dass die Doppelschichtkondensatoren nicht völlig identisch sind, sondern in ihrer Nennspannung innerhalb eines Streuungsbereichs liegen. Die einzelnen Doppelschichtkondensatoren, die in einer Reihenschaltung verwendet werden, müssen daher aufeinander abgestimmt werden.

Da eine Minimalspannung bei den Doppelschichtkondensatoren wegen der Anforderungen der an den Ausgang angeschlossenen sicherheitsrelevanten Verbraucher an den minimalen Spannungspegel der redundanten Energiequelle nicht unterschritten werden kann, können die Doppelschichtkondensatoren die in ihnen gespeicherte elektrische Energie nicht vollständig abgeben, was einen weiteren Nachteil der Doppelschichtkondensatoren darstellt. Außerdem ist für den Einbau einer Reihenschaltung von mehreren Doppelschichtkondensatoren ein großer Bauraum im Kraftfahrzeug notwendig, der nicht oder nur sehr eingeschränkt zur Verfügung gestellt werden kann.

Aus dem Dokument EP 1 360 090 B1 ist (siehe dort Fig. 4) ein Bordnetz eines Kraftfahrzeugs bekannt, das einen integrierten Starter-Generator (ISG) aufweist. Der ISG kann zum Beispiel eine Drehstrom-Asynchronmaschine mit elektronischem Wechselrichter sein, die an Stelle der Schwungscheibe direkt an die Kurbelwelle des Motors angebaut ist. Der ISG ersetzt sowohl die bekannte Lichtmaschine als auch den Anlasser eines herkömmlichen Fahrzeugs. Der ISG erlaubt neben dem Motorstart und der Bordnetzversorgung eine elektrische Drehmomentunterstützung des Motors und ein regeneratives Bremsen, bei dem elektrische Energie gewonnen wird.

Bei der Drehmomentunterstützung und dem regenerativen Bremsen treten kurzfristig hohe Leistungen mit hohen Strömen auf. Um diese hohen Leistungen bereit zu stellen oder aufzunehmen, weist das Bordnetz Doppelschichtkondensatoren auf. Um die Spannung von 42 V bereitzustellen, die am Ausgang des ISG auftritt, müssen eine entsprechende Anzahl von Doppelschichtkondensatoren in Reihe geschaltet sein. Die Doppelschichtkondensatoren sind an den Ausgang des ISG angschlossen.

An den Ausgang des ISG sind außerdem erste Verbraucher angeschlossen, die für die Nennspannung in diesem Teil des Bordnetzes ausgelegt sind. Das Bordnetz gemäß der Figur 4 weist ferner eine erste Batterie auf, die ebenfalls an den Ausgang des ISG angeschlossen ist, und eine zweite Batterie auf, die an den Ausgang eines DC/DC-Wandlers angeschlossen ist. Über den DC/DC-Wandler und/oder die zweite Batterie können zweite Verbraucher in einem Teil des Bordnetzes versorgt werden, das eine Nennspannung hat, die niedriger als die Ausgangsnennspannung des ISG ist, nämlich 12 V.

Ein Nachteil des Bordnetzes gemäß der Figur 4 des Dokumentes EP 1 360 090 B1 ist, dass bei einem Defekt des DC/DC-Wandlers, der ersten Batterie und des ISG eine Energieversorgung der ersten Verbraucher nicht mehr gewährleistet ist.

Der vorliegenden Erfindung lag daher die Aufgabe zugrunde, eine Speicheranordnung der eingangs genannten Art so zu verbessern, dass eine einfachere Wartung und auch Überwachung der Energiespeicheranordnung möglich ist. Insbesondere soll ein im Gegensatz zur Batterie wartungsfreies Energiespeichersystem geschaffen werden. Weiterhin soll bei der Auswahl des Trägers der Energie (Energiespeicher) der damit verknüpfte darstellbare Spannungspegel keine Einschränkung bedeuten. Schließlich soll die Versorgung eines ersten (sicherheitskritischen) Verbrauchers auch bei einem Ausfall der ISG, des DC/DC-Wandlers und der ersten Batterie gewährleistet sein.

Diese Aufgabe wird gemäß Anspruch 1 dadurch gelöst, dass der Ausgang des Generators mit einem ersten Eingang des sicherheitskritischen Verbrauchers verbunden ist und der Ausgang der Speicheranordnung mit einem zweiten redundanten, Eingang des sicherheitskritischen Verbrauchers verbunden ist.

Ein Vorteil des erfindungsgemäßen Bordnetzes ist, dass der sicherheitskritische Verbraucher zum einen unmittelbar ohne Zwischenschaltung eines Wandlers mit dem einen Teil des Bordnetzes mit der einen Nennspannung und zum anderen unmittelbar und ohne Zwischenschaltung eines Wandlers mit dem anderen Teil des Bordnetzes mit der anderen Nennspannung verbunden ist. Auch bei einem Ausfall eines Wandlers kann der sicherheitskritische Verbraucher aus dem Generator oder dem Energiespeicher versorgt werden.

Ein weiterer Vorteil eines erfindungsgemäßen Bordnetzes mit einer erfindungsgemäßen Speicheranordnung ist, dass der Energiespeicher auf der Ausgangsseite des DC/DC-Wandlers unabhängig von der Nennspannung beziehungsweise Minimalspannung im Bordnetz betrieben werden kann. Bei der Wahl des Energiespeichers muss nicht auf die Nennspannung am Eingang des DC/DC-Wandlers geachtet werden. Aus dem Energiespeicher kann dann sicherheitskritischen Verbrauchers über den zweiten Eingang unmittelbar versorgt werden, und zwar mit einer Spannung, die für die Wahl des Energiespeichers günstig ist. Es ist also möglich, über die Spannungswandler den Energiespeicher an die Nenn- beziehungsweise Minimalspannung des Kraftfahrzeugbordnetzes anzupassen. Dieses ermöglicht insbesondere die Verwendung eines einzelnen Doppelschichtkondensators, ohne dass dieser mit gleichartigen Doppelschichtkondensatoren in Reihe geschaltet werden muss. Der Bauraum, der sonst üblicher Weise für die verwendeten Reihenschaltungen aus Doppelschichtkondensatoren vorgehalten werden musste, ist für eine Speicheranordnung der erfindungsgemäßen Art nicht unbedingt notwendig.

Gemäß der Erfindung kann die Nennspannung am Eingang und/oder am Ausgang der Speicheranordnung, d. h. die Nennspannung des Bordnetzes größer sein als die Nennspannung des Energiespeichers.

Als elektrischen Spannungswandler kann eine erfindungsgemäße Speicheranordnung einen Zweiquadranten- oder einen Mehrquadrantensteller aufweisen, welcher zum Wandeln der Spannung und zum Transport der elektrischen Energie vom beziehungsweise zum Energiespeicher verwendet wird. Es kann sich dabei um einen bidirektionalen synchronen buck/boost-Wandler handeln.

Ebenso ist denkbar, dass zwei Einquadrantensteller als elektrische Spannungswandler Verwendung finden. Bei den Einquadrantenstellern kann es sich um Tiefsetzsteller und Hochsetzsteller handeln. Der Tiefsetzsteller verbindet den Eingang der Speicheranordnung mit dem Energiespeicher und der Hochsetzsteller verbindet den Energiespeicher mit dem Ausgang der Speicheranordnung.

Es ist ebenso denkbar, dass ein einziger Einquadrantensteller als elektrischer Spannungswandler Verwendung findet. In diesem Fall kann es sich beispielsweise um einen invertierenden Sperrsteller handeln.

Gemäß der Erfindung kann die Speicheranordnung Mittel zum Steuern des beziehungsweise der Spannungswandler aufweisen. Ebenso können Mittel zum Untersuchen des Zustands des Energiespeichers vorgesehen sein, die den Status des Energiespeichers an eine zentrale Steuervorrichtung der Speicheranordnung oder des Kraftfahrzeugbordnetzes melden.

Eine Speicheranordnung kann Mittel zum Schutz des Energiespeichers gegen Überspannungen und/oder Kurzschlüsse aufweisen.

Bei dem Energiespeicher kann es sich um einen Akkumulator, d. h. um eine herkömmliche Fahrzeugbatterie handeln. Die Vorteile der erfindungsgemäßen Speichervorrichtung kommen jedoch insbesondere bei der Verwendung eines Doppelschichtkondensätors als Energiespeicher zur Geltung.

Vorzugsweise weist eine Speicheranordnung Mittel zur Erkennung der Eingangsspannung der Speicheranordnung, d. h. der Bordnetzspannung auf. Das Mittel zum Erkennen der Eingangsspannung kann geeignet und eingerichtet sein, bei einem Ausfall der Bordnetzspannung und/oder einem Unterschreiten der Netzspannung des Bordnetzes durch die Bordnetzspannung um einen vorbestimmten Betrag einen Transport der elektrischen Energie aus dem Energiespeicher in den an dem Ausgang angeschlossenen Teil des Bordnetzes mit den sicherheitsrelevanten Verbrauchern einzuleiten.

Ein Ausführungsbeispiel für ein erfindungsgemäßes Bordnetz mit einer Speicheranordnung ist anhand der Zeichnung näher beschrieben. Es zeigt
- Fig. 1: ein Blockschaltbild für ein erfindungsgemäßes Bordnetz,
- Fig. 2: eine Speicheranordnung in einer ersten Ausführung als Blockschaltbild und
- Fig. 3: eine Speicheranordnung in einer zweiten Ausführung als Blockschaltbild.

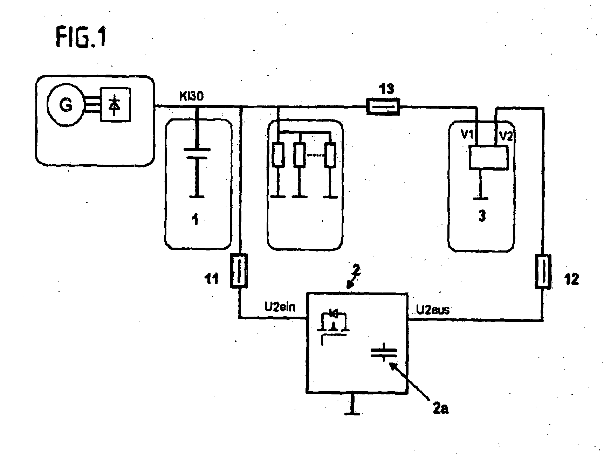

Das erfindungsgemäße Bordnetz gemäß Fig. 1 weist einen Generator G auf, der mit einer Starterbatterie 1 und mit einem Eingang U2ein einer Speicheranordnung 2 über eine Leitung 11 verbunden ist. Ebenso ist der Generatorausgang mit verschiedenen Verbrauchern verbunden, insbesondere über eine Leitung 13 mit dem Eingang V1 eines sicherheitsrelevanten Verbrauchers 3.

Die Speicheranordnung 2 weist einen Energiespeicher 2a auf. Dieser nimmt die über den Eingang U2ein der Energiespeicheranordnung 2 zur Speicheranordnung transportierte elektrische Energie auf. Über den Ausgang U2aus, der über eine Leitung 12 mit einem Versorgungseingang V2 des sicherheitsrelevanten Verbrauchers 3 verbunden ist, kann die in dem Energiespeicher 2a gespeicherte Energie von der Speicheranordnung abgegeben werden. Die Speicheranordnung ist ferner mit dem Massepotential des Kraftfahrzeuges verbunden.

Im störungsfreien Betrieb wird elektrische Energie über den Generator G bereitgestellt. Diese wird in die Starterbatterie 1 eingespeist und den Verbrauchern, darunter dem sicherheitsrelevanten Verbraucher 3 zur Verfügung gestellt. Gleichzeitig entnimmt die Energiespeicheranordnung 2 dem Kraftfahrzeugbordnetz elektrische Energie bis der Energiespeicher 2a geladen ist. Weiterhin wird dafür gesorgt, dass der Energiespeicher 2a geladen bleibt, falls im Falle einer Selbstentladung die Spannung des Energiespeichers 2a abnehmen sollte.

Fällt nun der Generator G und die Starterbatterie 1 zum Beispiel durch ein Defekt aus, sorgt die Energiespeicheranordnung 2 dafür, dass an ihrem Ausgang U2aus, der über das Verbindungselement 12 mit dem zweiten, redundanten Versorgungseingang V2 des sicherheitsrelevanten Verbrauchers 3 verbunden ist, der Spannungspegel im definierten Bereich bleibt, eine ausreichende Energiemenge zur Verfügung gestellt wird und das erforderliche Lastprofil erfüllt werden kann.

Der Ausfall insbesondere der Starterbatterie 1 kann dadurch ermittelt werden, dass die erfindungsgemäße Speicheranordnung 2 den Wert der Eingangsspannung U2ein überwacht.

Das Verhalten der Speicheranordnung 2 und das Bereitstellen der elektrischen Energie am Ausgang U2aus der Speicheranordnung kann der jeweiligen Verwendung angepasst werden. Es ist denkbar, dass der Ausgang U2aus erst dann mit elektrischer Energie versorgt wird, wenn der Ausfall der Starterbatterie erkannt wird. Alternativ ist es denkbar, dass am Ausgang U2aus der Speicheranordnung zumindest auch dann zeitweise Energie zur Verfügung gestellt wird, wenn die Starterbatterie regulär funktioniert. Letzteres kann als Möglichkeit zur Diagnose der Speicheranordnung 2 genutzt werden. Eine Überwachungselektronik, zum Beispiel im sicherheitsrelevanten Verbraucher 3 könnte in diesem Fall durch die Bewertung des Verhaltens der Speicheranordnung 2 auf den Zustand des Energiespeichers 2a schließen. Eine regelmäßige Überprüfung der Speicheranordnung 2 gerade in sicherheitsrelevanten Systemen ist nämlich empfehlenswert und zum Teil sogar notwendig.

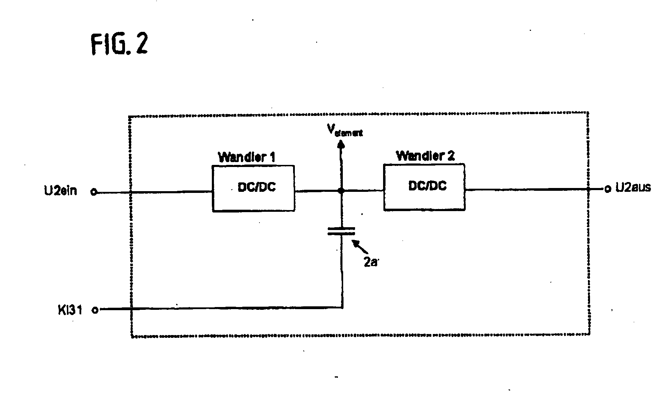

In der Fig. 2 ist als Spannungswandler ein Tiefsetzsteller Wandler 1 und ein Hochsetzsteller Wandler 2 verwendet, wobei der Tiefsetzsteller Wandler 1 zwischen dem Eingang U2ein und dem Energiespeicher 2a und der Hochsetzsteller Wandler 2 zwischen dem Energiespeicher 2a und dem Ausgang U2aus geschaltet ist.

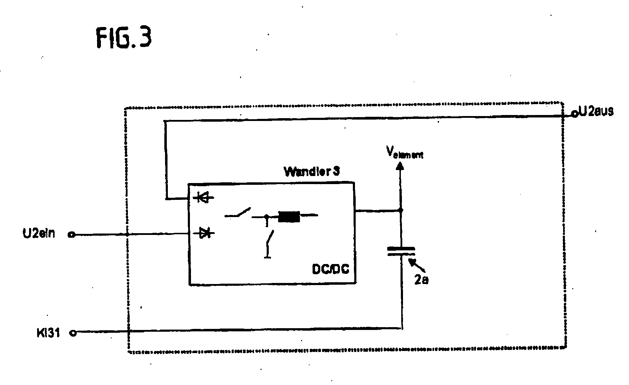

Dagegen wird bei der Speicheranordnung Wandler 3 gemäß Fig. 3 ein bidirektionaler Spannungswandler verwendet. Es kann sich dabei zum Beispiel um einen synchronen buck/boost Wandler handeln, der in Fig. 2 schematisch dargestellt ist. Die Verwendung eines buck/boost Wandlers ist vorteilhaft, da weniger Bauteile erforderlich sind. Da bei dieser Ausführung der Energiespeicher 2a nicht gleichzeitig geladen und entladen werden kann, muss zwischen einem Lademodus und einem Entlademodus geschaltet werden können. Die Aktivierung des Entlademodus erfolgt dabei immer dann, wenn die Starterbatterie 1 des Kraftfahrzeugs ausfällt. Der Eingang und der Ausgang des buck/boost Wandlers sind in dieser Ausführungsform hinsichtlich ihrer Energieflussrichtung entkoppelt, was durch die beiden angedeuteten Dioden dargestellt ist.

### Bezugszeichenliste

- 1: primäre Energiequelle z. B. Fahrzeugbatterie bzw. Starterbatterie
- 2: Speicheranordnung
- 2a: Energiespeicher
- 3: Verbrauchers
- V1: Versorgungseingang
- V2: redundanter Versorgungseingang
- U2ein: Eingang
- U2aus: Ausgang
- 11: Verbindungselement/Leiter
- 12: Verbindungselement
- 13: Verbindungselement
- G: Generator
- Wandler 1: Tiefsetzsteller
- Wandler 2: Hochsetzsteller
- Wandler 3: Zweiquadrantensteller

## Patentansprüche

1. Bordnetz in einem Kraftfahrzeug mit zumindest einem sicherheitsrelevanten Verbraucher (3), mit einer Starterbatterie (1), einem Generator (G) und mit einer Speicheranordnung (2) für elektrische Energie,
wobei die Speicheranordnung (2) geeignet und eingerichtet ist, bei Ausfall des Generators (G) und/oder der Starterbatterie (1) die Energie für den sicherheitsrelevanten Verbraucher (3) zur Verfügung zu stellen,
wobei die Speicheranordnung (2) einen Energiespeicher (2a), einen Eingang (U2ein) und einen Ausgang (U2aus) aufweist und
wobei die Speicheranordnung geeignet und eingerichtet ist, über den Eingang (U2ein) elektrische Energie aus dem Bordnetz zum Speichern in dem Energiespeicher (2a) aufzunehmen und über den Ausgang (U2aus) aus dem Energiespeicher (2a) entnommene elektrische Energie an einen an Ausgang (U2aus) angeschlossenen Teil des Bordnetzes abzugeben,
wobei die Speicheranordnung (2) zumindest einen elektrischen Spannungswandler (DC/DC) aufweist, der für den Transport von elektrischer Energie zwischen dem Eingang (U2ein) und/oder dem Ausgang (U2aus) einerseits und dem Energiespeicher (2a) andererseits geeignet und eingerichtet ist, wobei ein Ausgang des Generators (G) mit einem der Eingänge der Speicheranordnung (2) und der Starterbatterie (1) verbunden ist,
**dadurch gekennzeichnet, dass**
der Ausgang des Generators (G) mit einem ersten Eingang (V1) des sicherheitskritischen Verbrauchers (3) verbunden ist und der Ausgang (U2aus) der Speicheranordnung mit einem zweiten, redundanten Eingang (V2) des sicherheitskritischen Verbrauchers (3) verbunden ist.

2. Bordnetz nach Anspruch 1, **dadurch gekennzeichnet, dass** eine Nennspannung am Eingang (U2ein) und/oder Ausgang (U2aus) größer ist als eine Nennspannung des Energiespeichers (2a).

3. Bordnetz nach Anspruch 1 oder 2, **dadurch gekennzeichnet, dass** die Speicheranordnung (2) einen Zweiquadrantensteller oder einen Mehrquadrantensteller als elektrischen Spannungswandler aufweist.

4. Bordnetz nach Anspruch 3, **dadurch gekennzeichnet, dass** der Zweiquadrantensteller ein bi-direktionaler synchroner buck/boost Wandler (Wandler 3) ist.

5. Bordnetz nach Anspruch 1 oder 2, **dadurch gekennzeichnet, dass** die Speicheranordnung (2) zwei Einquadrantensteller (DC/DC) als elektrische Spannungswandler aufweist.

6. Bordnetz nach Anspruch 5, **dadurch gekennzeichnet, dass** der eine Einquadrantensteller ein Tiefsetzsteller (Wandler 1) und der andere Einquadrantensteller ein Hochsetzsteller (Wandler 2) ist.

7. Bordnetz nach Anspruch 1 oder 2, **dadurch gekennzeichnet, dass** die Speicheranordnuhg einen Einquadrantensteller (DC/DC) als elektrischen Spannungswandler aufweist.

8. Bordnetz nach Anspruch 7, **dadurch gekennzeichnet, dass** der eine Einquadrantensteller (DC/DC) ein Sperrsteller ist.

9. Bordnetz nach einem der Ansprüche 1 bis 8, **dadurch gekennzeichnet, dass** die Speicheranordnung (2) Mittel zum Steuern des bzw. der Spannungswandler (DC/DC) aufweist.

10. Bordnetz nach einem der Ansprüche 1 bis 9, **dadurch gekennzeichnet, dass** die Speicheranordnung (2) Mittel zum Untersuchen des Zustands des Energiespeichers (2a) aufweist.

11. Bordnetz nach einem der Ansprüche 1 bis 10, **dadurch gekennzeichnet, dass** die Speicheranordnung (2) Mittel zum Schutz des Energiespeichers gegen Überspannungen und/oder Kurzschlüsse aufweist.

12. Bordnetz nach einem der Ansprüche 1 bis 11, **dadurch gekennzeichnet, dass** der Energiespeicher (2a) eine Akkumulator ist.

13. Bordnetz nach einem der Ansprüche 1 bis 11, **dadurch gekennzeichnet, dass** der Energiespeicher (2a) ein oder mehrere Doppelschichtkondensatoren umfasst.

14. Bordnetz nach einem der Ansprüche 1 bis 13, **dadurch gekennzeichnet, dass** die Speicheranordnung (2) Mittel zum Erkennen der Eingangsspannung umfasst.

15. Bordnetz nach Anspruch 14, **dadurch gekennzeichnet, dass** das Mittel zum Erkennen der Eingangsspannung geeignet und eingerichtet ist bei einem Ausfall Bordnetzspannung und/oder bei einem Unterschreiten der Nennspannung des Bordnetzes durch die Bordnetzspannung um einen vorbestimmten Betrag, z. B. 5 V, einen Transport der elektrischen Energie aus dem Energiespeicher (2a) in den an den Ausgang (U2aus) angeschlossenen Teil des Bordnetzes einzuleiten.

## Claims

1. Vehicle electric system in a motor vehicle with at least one safety-relevant consumer (3), having a starter battery (1), a generator (G) and a storage arrangement (2) for electric energy,
wherein the storage arrangement (2) is suitable and fit for the provision of the energy for the safety-relevant consumer (3) in case of a failure of the generator (G) and/ or the starter battery (1),
wherein the storage arrangement (2) has an energy storage (2a), an input (U2ein) and an output (U2aus) and
wherein the storage arrangement is suitable and fit for drawing electric energy from the vehicle electric system via the input (U2ein) for storage in the energy storage (2a) and for feeding electric energy from the energy storage (2a) via the output (U2aus) into a part of the vehicle electric system connected to an output (U2aus),
wherein the storage arrangement (2) has at least one electric voltage transformer (DC/DC), which is suitable and fit for the transport of electric energy between the input (U2ein) and/ or the output (U2aus) on one hand and the energy storage (2a) on the other hand, wherein an output of the generator (G) is connected to one of the inputs of the storage arrangement (2) and the starter battery (1),
**characterized in that**
the output of the generator (G) is connected to a first input (V1) of the safety-critical consumer (3) and the output (U2aus) of the storage arrangement is connected to a second, redundant input (V2) of the safety-critical consumer (3).

2. Vehicle electric system according to Claim 1, **characterized in that** a nominal voltage at the input (U2ein) and/or output (U2aus) is larger than a nominal voltage of the energy storage (2a).

3. Vehicle electric system according to Claim 1 or 2, **characterized in that** the storage arrangement (2) has a two-quadrant chopper or a multi-quadrant chopper as an electric voltage transformer.

4. Vehicle electric system according to Claim 3, **characterized in that** the two-quadrant chopper is a bi-directional synchronous buck/boost transformer (transformer 3).

5. Vehicle electric system according to Claim 1 or 2, **characterized in that** the storage arrangement (2) has two one-quadrant choppers (DC/DC) as electric voltage transformers.

6. Vehicle electric system according to Claim 5, **characterized in that** one of the one-quadrant choppers is a buck transformer (transformer 1) and the other one-quadrant chopper is a boost transformer (transformer 2).

7. Vehicle electric system according to Claim 1 or 2, **characterized in that** the storage arrangement has one one-quadrant chopper (DC/DC) as an electric voltage transformer.

8. Vehicle electric system according to Claim 7, **characterized in that** the one one-quadrant chopper (DC/DC) is a flyback converter.

9. Vehicle electric system according to one of the Claims 1 to 8, **characterized in that** the storage arrangement (2) has means for the control of the voltage transformer or the voltage transformers (DC/DC) respectively.

10. Vehicle electric system according to one of the Claims 1 to 9, **characterized in that** the storage arrangement (2) has means for the analysis of the condition of the energy storage (2a).

11. Vehicle electric system according to one of the Claims 1 to 10, **characterized in that** the storage arrangement (2) has means for the protection of the energy storage against overvoltages and/ or short-circuits.

12. Vehicle electric system according to one of the Claims 1 to 11, **characterized in that** the energy storage (2a) is an accumulator.

13. Vehicle electric system according to one of the Claims 1 to 11, **characterized in that** the energy storage (2a) comprises one or more electric double layer capacitors.

14. Vehicle electric system according to one of the Claims 1 to 13, **characterized in that** the storage arrangement (2) has means for the detection of the input voltage.

15. Vehicle electric system according to Claim 14, **characterized in that** the means for the detection of the input voltage is suitable and fit for the initiation of a transport of electric energy from the energy storage (2a) into the part of the vehicle electric system connected to the output (U2aus) in case of a failure of the vehicle electric voltage and/ or in case the nominal voltage of the vehicle electric system falls below a predetermined value, e.g. 5 V.

## Revendications

1. Réseau de bord dans un véhicule automobile avec au moins un consommateur de sécurité (3), avec une batterie de démarrage (1), une génératrice (G) et avec un agencement de mémoire (2) pour l'énergie électrique,
l'agencement de mémoire (2) étant approprié et configuré à fournir de l'énergie au consommateur de sécurité (3) en cas de défaillance de la génératrice (G) et/ou de la batterie de démarrage (1),
l'agencement de mémoire (2) présentant un accumulateur d'énergie (2a), une entrée (U2ein) et une sortie (U2aus) et
l'agencement de mémoire étant approprié et configuré à absorber l'énergie électrique du réseau de bord par l'intermédiaire de l'entrée (U2ein) pour la mémoriser dans l'accumulateur d'énergie (2a) et à dégager l'énergie électrique prélevée de l'accumulateur d'énergie (2a) par l'intermédiaire de la sortie (U2aus) à une partie du réseau de bord reliée à la sortie (U2aus),
l'agencement de mémoire (2) présentant au moins un convertisseur de tension électrique (DC/DC) qui est approprié et configuré à transporter l'énergie électrique entre l'entrée (U2ein) et/ou la sortie (U2aus) d'un côté, et l'accumulateur d'énergie (2a) de l'autre côté,
une sortie de la génératrice (G) étant reliée à une des entrées de l'agencement de mémoire (2) et la batterie de démarrage (1), **caractérisé en ce que**
la sortie de la génératrice (G) est reliée à une première entrée (V1) du consommateur de sécurité (3) et la sortie (U2aus) de l'agencement de mémoire est reliée à une deuxième entrée (V2) redondante du consommateur de sécurité (3).

2. Réseau de bord selon la revendication 1, **caractérisé en ce qu'**une tension nominale à l'entrée (U2ein) et/ou à la sortie (U2aus) est plus élevée qu'une tension nominale de l'accumulateur d'énergie (2a).

3. Réseau de bord selon la revendication 1 ou 2, **caractérisé en ce que** l'agencement de mémoire (2) présente un actionneur à deux quadrants ou un actionneur à plusieurs quadrants en tant que convertisseur de tension.

4. Réseau de bord selon la revendication 3, **caractérisé en ce que** l'actionneur à deux quadrants est un convertisseur buck/boost bidirectionnel synchrone (convertisseur 3).

5. Réseau de bord selon la revendication 1 ou 2, **caractérisé en ce que** l'agencement de mémoire (2) présente deux actionneurs à un quadrant (DC/DC) en tant que convertisseur de tension.

6. Réseau de bord selon la revendication 5, **caractérisé en ce que** l'un des actionneurs à un quadrant est un convertisseur abaisseur (convertisseur 1) et l'autre est un convertisseur élévateur (convertisseur 2).

7. Réseau de bord selon la revendication 1 ou 2, **caractérisé en ce que** l'agencement de mémoire présente un actionneur à un quadrant (DC/DC) en tant que convertisseur de tension.

8. Réseau de bord selon la revendication 7, **caractérisé en ce que** l'un des actionneurs à un quadrant (DC/DC) est un actionneur de verrouillage.

9. Réseau de bord selon l'une des revendications 1 à 8, **caractérisé en ce que** l'agencement de mémoire (2) présente des moyens pour commander le ou les convertisseurs de tension (DC/DC).

10. Réseau de bord selon l'une des revendications 1 à 9, **caractérisé en ce que** l'agencement de mémoire (2) présente des moyens pour analyser l'état de l'accumulateur d'énergie (2a).

11. Réseau de bord selon l'une des revendications 1 à 10, **caractérisé en ce que** l'agencement de mémoire (2) présente des moyens pour protéger l'accumulateur d'énergie contre des surtensions et/ou des courts-circuits.

12. Réseau de bord selon l'une des revendications 1 à 11, **caractérisé en ce que** l'accumulateur d'énergie (2a) est un accumulateur.

13. Réseau de bord selon l'une des revendications 1 à 11, **caractérisé en ce que** l'accumulateur d'énergie (2a) comprend un ou plusieurs condensateurs à double couche.

14. Réseau de bord selon l'une des revendications 1 à 13, **caractérisé en ce que** l'agencement de mémoire (2) présente des moyens pour reconnaître la tension d'entrée.

15. Réseau de bord selon la revendication 14, **caractérisé en ce que** le moyen pour reconnaître la tension d'entrée est approprié et configuré à introduire un transport de l'énergie électrique de l'accumulateur d'énergie (2a) vers la partie du réseau de bord reliée à la sortie (U2aus) en cas de défaillance de la tension du réseau de bord et/ou lorsque la tension du réseau de bord passe en-dessous de la tension nominale du réseau de bord d'une valeur prédéterminée, par exemple 5 V.
